# EUROPÄISCHE PATENTSCHRIFT

(11) **EP 3 931 557 B1**
(45) Veröffentlichungstag und Bekanntmachung des Hinweises auf die Patenterteilung: **22.04.2026**
(21) Anmeldenummer: 20701254.3
(22) Anmeldetag: 02.01.2020
(51) Int. Cl.: G01N 27/90, G01N 29/024, G01N 29/032, G01N 29/22

(54) **SYSTEM ZUR ÜBERWACHUNG DER MATERIALPARAMETER UND/ODER HOMOGENITÄT EINER DURCH EINEN KANAL GEFÖRDERTEN SUSPENSION**
SYSTEM FOR MONITORING THE MATERIAL PARAMETERS AND/OR HOMOGENEITY OF A SUSPENSION CONVEYED THROUGH A CHANNEL
SYSTÈME POUR CONTRÔLER LES PARAMÈTRES MATÉRIELS ET/OU L'HOMOGÉNÉITÉ D'UNE SUSPENSION ACHEMINÉE PAR UN CANAL

(30) Priorität: 01.03.2019 DE 102019202846
(43) Veröffentlichungstag der Anmeldung: 05.01.2022
(73) Patentinhaber: Fraunhofer-Gesellschaft zur Förderung der angewandten Forschung e.V., 80686 München (DE)
(72) Erfinder: WILD, Marcel, 01109 Dresden (DE); HEUER, Henning, 01109 Dresden (DE); SCHULZE, Martin, 01109 Dresden (DE); HERZOG, Thomas, 01109 Dresden (DE)
(74) Vertreter: Pfenning, Meinig & Partner mbB
(86) Internationale Anmeldenummer: PCT/EP2020/050035
(87) Internationale Veröffentlichungsnummer: WO 2020/177932

(56) Entgegenhaltungen:
- DE-A1- 3 438 798
- US-A- 4 955 235
- US-A- 5 333 502

## Beschreibung

Die Erfindung betrifft ein System mit einem Messsystem zur Überwachung der Materialparameter und/oder Homogenität einer durch einen Kanal geförderten Suspension. Bei der Suspension kann es sich um Slurrys und Extrudaten, die für die Herstellung von Elektroden für elektrische Akkumulatoren oder elektrischen Energiespeichern (Batterien) eingesetzt werden sollen.

So ist insbesondere die Elektromobilität zum derzeitigen Stand der Technik in einem rasanten Wachstum. Damit ergibt sich auf dem Gebiet der Akkumulatoren ein breites Spektrum an Forschung und Entwicklung. Die Erfüllung von Sicherheits- und Qualitätsstandards sind dabei von hoher Priorität.

Die Grundbestandteile eines Akkumulators gliedern sich in Anode, Kathode, Elektrolyt und einem Separator. Das Anoden- und Kathodenmaterial befindet sich auf einer Trägerfolie. Bei der Anode ist das Material der Trägerfolie typischerweise Kupfer und bei der Kathode Aluminium. Zum derzeitigen Stand der Technik erfolgt die Beschichtung des Elektrodenmaterials durch einen Foliengießprozess auf die Oberfläche einer Trägerfolie. Das Elektrodenmaterial weist einen hohen Lösemittelanteil auf. Durch einen Extrusionsprozess, der mit einem deutlich geringeren Lösemittelanteil realisiert werden kann, wird das Material unter Verwendung eines Extruders hergestellt und gefördert. Das Elektrodenmaterial wird mit einem speziellen Werkzeug auf die Trägerfolie aufgebracht.

Während des Extrusionsprozesses kann es zu Inhomogenitäten im Material kommen, wodurch deren Eigenschaften und somit die spätere Funktionsfähigkeit des Akkumulators beeinflusst wird. Eine zu späte Prüfung und somit Detektion solcher Fehler nach der Applikation führt zur Produktion von unbrauchbarem Material, wodurch die Wirtschaftlichkeit sowie die Umwelt negativ beeinflusst werden.

Der derzeitige Stand der Technik ermöglicht keine ausreichend genaue Prüfung des extrudierten Materials im laufenden Prozess. Die Prüfung des Materials erfolgt momentan über eine nachträgliche Funktionsprüfung der bereits gefertigten Elektroden. Dadurch kann anhand von Referenz- und Erfahrungswerten die Qualität des Akkumulators bestimmt werden. Bei Nichterfüllung der erwarteten Qualität müssen Folgeuntersuchungen des Materials durchgeführt werden. Im Anschluss wird der Herstellungsprozess angepasst. Parallel zu dem Beschichtungsprozess und der anschließenden Funktionsprüfung wird Elektrodenmaterial hergestellt. Das sichert einen ununterbrochenen Prozessfluss. Nachteilig ist die späte Fehlererkennung, wodurch fehlerhaftes und unbrauchbares Material produziert wird.

Eine Prüfung des extrudierten Elektrodenmaterials mit zerstörungsfreien Prüfverfahren während des Herstellungsprozesses ist zum derzeitigen Stand der Technik nicht möglich.

Auch bei der Überwachung der Qualität anderer Suspensionen oder Extrudaten treten diese Probleme auf.

So sind aus US 5 333 502 A eine Vorrichtung und ein Verfahren bekannt, mit der Eigenschaften einer Partikel enthaltenden Flüssigkeit, die in einem Tank gelagert oder durch ein Rohr strömt.

Es ist daher Aufgabe der Erfindung, Möglichkeiten für die Überwachung einer durch einen Kanal geförderten Suspension anzugeben, mit denen Fehler bzw. Abweichungen von einer bestimmten qualitätsbedingten Konsistenz erkannt und ggf. kompensiert und/oder Materialparameter bestimmt werden können, bevor es zur Fertigstellung eines Produktes unter Einsatz der jeweiligen Suspension kommt.

Erfindungsgemäß wird diese Aufgabe mit einem System, das die Merkmale des Anspruchs 1 aufweist, gelöst. Vorteilhafte Ausgestaltungen und Weiterbildungen der Erfindung können mit in untergeordneten Ansprüchen bezeichneten Merkmalen realisiert werden.

Die Herausforderung besteht in der Entwicklung eines Messsystems, das Daten bezüglich der Materialeigenschaften aufzeichnet. Durch die gleichzeitige Aufnahme von Wirbelstrom- und Ultraschallsignalen mit dem Messsystem ist es möglich, Materialeigenschaften der jeweils geförderten, insbesondere extrudierten Suspension während deren Förderung zu ermitteln. Mit der Suspension können Elektroden für elektrische Akkumulatoren oder elektrische Energiespeicher hergestellt werden.

Der Messsystemaufbau teilt sich in einen Wirbelstrom- und Ultraschallmesssensorsystem. Diese können in einem Gehäuse gemeinsam angeordnet bzw. fixiert sein. Zur Bestimmung von den elektrischen, magnetischen und dielektrischen Eigenschaften wird ein zur Wirbelstromdetektion ausgebildetes Sensorsystem eingesetzt. Für die Bestimmung mechanischer Eigenschaften ist ein zur Ultraschallprüfung ausgebildetes Sensorsystem vorhanden. Es ist eine Anordnung dieser beiden Sensorsysteme zwischen Extruder und angeschlossener Austrittsdüse vorgesehen. Dabei wird die Suspension als Extrudat durch einen Kanal, der dann als Messrohr ausgebildet sein kann, gefördert. Die beiden Sensorsysteme sind in jedem Fall in Bewegungsrichtung der Suspension nacheinander angeordnet. Das Ultraschallsensorsystem kann als in Bewegungsrichtung der Suspension vor oder nach dem Wirbelstromsensorsystem angeordnet sein.

Mit beiden Sensorsystemen muss kein direkter Eingriff in den Prozess erfolgen. Gegenüber der bisherigen Materialprüfung ermöglicht diese Inline-Prüfung bei fehlerhafter Konsistenz der Suspension, insbesondere bei Inhomogenitäten innerhalb eines Volumens eine sofortige Anpassung der Prozessparameter oder eine Initiierung eines Produktionsstopps. Somit kann die Produktion von unbrauchbarem Material vermieden werden. Dies führt zu einer verbesserten Wirtschaftlichkeit und einer verringerten Umweltbelastung.

Ein zur Wirbelstromdetektion ausgebildetes Sensorsystem kann mit mindestens einer elektrischen Sendespule und mindestens einer elektrischen Empfängerspule oder auch mit einem Riesen-magnetorisistiven Sensor (GMR), anisotropen magnetoresistiven Sensor (AMR), supraleitenden Quanteninterferenz-Sensor (SQUID) oder einem Hall-Sensor gebildet sein.

Die Ausbildung eines magnetischen Feldes (Primärfeld) durch eine stromdurchflossene elektrische Sendespule ruft in einem leitfähigen Messobjekt Wirbelströme und Verschiebungsströme hervor. Dadurch wird ein zweites Magnetfeld (Sekundärfeld) infolge elektrischer Induktion ausgebildet. Der Effekt aus den Wechselwirkungen der zwei Magnetfelder kann im Wirbelstromverfahren ausgenutzt werden. Die Stärke des magnetischen Sekundärfeldes, das von der Empfängerspule aufgenommen wird, hängt von den Wirbelstrom und Verschiebungsstromverlusten im Messobjekt, also der Suspension, die sich innerhalb des jeweiligen Detektionsbereichs während ihrer Förderung befindet, ab. Diese wird durch die elektrischen, magnetischen und dielektrischen Eigenschaften der Suspension definiert.

Weiterhin kann bei dem Wirbelstromverfahren eine Absolutmessung oder eine Differenzmessung realisiert werden. Bei der Absolutmessung wirkt sich ein Fehler/Materialveränderung absolut verstärkend oder abschwächend aus. Die Differenzmessung ermöglicht durch Kompensation der Magnetfelder (Primär- und Sekundärfeld) eine unmittelbare Aufzeichnung des Fehlersignals. Mit der hier beschriebenen Erfindung kann eine Absolut- und/oder eine Differenzmessung realisiert werden. Bei der Absolutmessung sollten Sende- und Empfängerspule in einem gemeinsamen Sensormodul angeordnet sein. Die Sendespule sollte dabei die außen und die Empfängerspule die innen angeordnete elektrische Spule sein. Die elektrische Spannung, die in der jeweiligen Empfängerspule induziert worden ist, enthält neben der interessanten Fehlersignalspannung (Informationen über Materialveränderungen, Materialzusammensetzung, Risse, Hohlräume, Materialfehler) auch die induzierte elektrische Spulenspannung sowie Störsignale etc. Diese Eigenschaft kann dazu führen, dass kleine Materialschwankungen nicht erkennbar sind.

Bei der Differenzmessung können zwei identische elektrische Absolutspulen als Sende- und Empfängerspule genutzt werden, die gegenläufig elektrisch verschaltet sind. Dies führt zur Kompensation des Sende- und Empfangsfeldes. Somit ist zu Beginn der Messung oder bei einer homogenen Suspension, insbesondere einem homogenen Extrudatmaterial die elektrische Empfängerspulenspannung gleich null. Dadurch ist es möglich, geringe Schwankungen der Konsistenz und somit kleine Amplitudenauslenkungen erfass- und auswertbar zu machen, da hier nur die Fehlersignalspannung, welche infolge von Inhomogenitäten gemessen wird, herangezogen wird. Beide Durchführungsformen einer Wirbelstromprüfung können in einem mechanischen Freiraum des Sensorsystems realisiert werden.

Die Integration des Wirbelstrommessverfahrens mit einem entsprechenden Sensorsystem kann über Sensormodule realisiert werden. Diese können im Wirbelstrommessbereich innerhalb eines Gehäuses, das am jeweiligen Kanal angeordnet bzw. befestigt sein kann, fixiert werden. Dabei kann es sich um mehrere aus Sende- und Empfängerspule gebildete Sensormodule handeln. Sie enthalten eine an die jeweilige Prüfaufgabe angepasste Spulenpaare und eine Schnittstelle zur elektronischen Auswerteeinheit. Die Spulenmodule können dabei eine Durchbrechung, insbesondere eine Bohrung aufweisen, durch die der jeweilige Kanal bzw. ein Messrohr möglichst passgenau geführt sein kann. Im Bereich der Durchbrechung/Bohrung kann ein Außendurchlaufsensor angebracht sein. Mittels eines großzügig bemessenen mechanischen Freiraums im Wirbelstrommessbereich, ist der Einsatz von bevorzugt verschiedenen Sensorsystemen, die zur Wirbelstrommessung ausgebildet sind, möglich. Mit mehreren unterschiedlich konfigurierten Sensormodulen kann eine Anpassung an unterschiedliche Suspensionen bzw. Suspensionszusammensetzungen erreicht werden, indem ein jeweils geeignetes Sensormodul zur Überwachung ausgewählt wird, das möglichst die höchste Sensitivität für die jeweilige Suspension aufweist.

Es kann auch mindestens eine Sendespule um den Kanalumfang ausgebildet oder angeordnet und eine Empfängerspule im Inneren der Sendespule, in die Kanalwandung integriert, in Nuten an der Außenwand des Kanals aufgenommen oder im Inneren des Kanals angeordnet sein.

Die zerstörungsfreie Prüfung und Untersuchung der jeweiligen Suspension, insbesondere bezüglich deren mechanischen Eigenschaften, kann mit dem Ultraschallverfahren durchgeführt werden. Die Emission von Schallwellen kann mittels Hochfrequenzimpulsen erfolgen. Durch die Erregung mit einem Impulsschall dringen Impuls-Echo-Signale in das Suspensionsmaterial ein. Aufgrund von unterschiedlichen Materialcharakteristiken kommt es zu Laufzeitenverschiebungen und Amplitudenschwächungen der Schallwellen.

Zur Bewertung können die Reflexions- und Transmissionssignale genutzt werden.

Fungiert ein Ultraschallwandler als Sender und Empfänger können die Reflexionssignale der Schallwellen mit dem einen Ultraschallwandler erfasst und dann ausgewertet werden, wenn dieser von einem Sende- in einen Empfangsmodus umgeschaltet worden ist. Zur Analyse von Transmissionssignalen werden zwei Ultraschallwandler eingesetzt. Dabei dient einer als Sender und der gegenüberliegende Ultraschallwandler als Empfänger der Schallwellensignale. Die Erfindung ermöglicht die nahezu zeitgleiche Aufnahme von Reflexions- und Transmissionssignalen. Aufgrund von Inhomogenität oder Fehlern in der Suspensionskonsistenz verändert sich die Charakteristik und Richtung des Sendeschallimpulses im Vergleich zu detektierten Schallmesssignalen, die für eine korrekte Suspensionskonsistenz repräsentativ sind. Diese veränderten Messsignale können eine Aussage über die Materialeigenschaften liefern.

Die Adaption der Ultraschallwandler in das Sensorsystem sollte im Bereich des Ultraschallmessbereichs erfolgen. In diesem Bereich können die äußeren Abmessungen des Kanals, insbesondere der Außenradius eines Messrohres für eine verbesserte Kopplung konkav oder abgeflacht, also planar ausgebildet sein. Mit planparallelen Flächen zwischen Ultraschallwandler und Kanalaußenwand kann eine gute Ein- und Auskopplung erreicht werden.

Sind die Oberfläche(n) des/der Ultraschallwandler, über die die Schallwellen emittiert und detektiert werden, konkav und komplementär dazu die Kanalaußenwand in dem Bereich, in dem ein Ultraschallwandler angeordnet ist, konvex gewölbt ausgebildet, kann eine Fokussierung der Schallwellen erreicht werden, die zu einer Erhöhung der Messempfindlichkeit führen kann.

Aufgrund der Notwendigkeit eines Koppelmediums zur Ankopplung des Ultraschalls sollte ein geschlossener Bereich an einem Gehäuse, in dem der/die Ultraschallwandler angeordnet und gehalten ist, vorgesehen sein.

Unter Nutzung der genannten Eigenschaften kann das erfindungsgemäße Messsystem am Ausgang eines Extruders angeordnet werden. Dadurch können die elektrischen und mechanischen Eigenschaften einer Suspension als Extrudat während des Herstellungsprozesses überwacht werden. Eine beispielhafte Anwendung ist die Herstellung von Batterieelektroden. Diese bestehen aus einer elektrisch leitenden Trägerfolie mit aufgebrachtem Elektrodenmaterial. Zur Herstellung eines solchen Elektrodenmaterials kann ein Extruder genutzt werden. Das Ziel des Extrusionsprozesses ist die Homogenisierung und Dispergierung der Komponenten mit denen das Extrudat als ein Beispiel für eine Suspension überwacht werden kann. Zur Erfüllung von Qualitäts- und Sicherheitsstandards der damit hergestellten Akkumulatoren spielt der Prüfprozess eine elementare Rolle. Dieser kann mit der Erfindung durchgeführt werden. Damit wird es ermöglicht, aus der kombinierten Anwendung des Ultraschall- und Wirbelstromverfahrens eine Materialcharakterisierung durchzuführen. Es können mit diesem Vorgehen Rückschlüsse auf die elektrischen und mechanischen Eigenschaften sowie die Homogenität gezogen werden. Die Auswertung der erfassten Messsignale kann unter Einsatz der elektromagnetischen und akustischen Impedanzspektroskopie erfolgen. Diese Art der Spektroskopie zielt auf die Zerlegung von Signalen in ihre Bestandteile ab. Zur Bewertung der Signale können signifikante Bereiche, in denen eine Differenzierung möglich ist, ausgewählt werden. So können dafür beispielsweise Bereiche in denen innerhalb eines vorgegebenen Zeitintervalls eine bestimmte ebenfalls vorgebbare Über- und/oder Unterschreitung eines Schwellwertes, der ebenfalls für die jeweilige Suspension vorgegeben werden kann, für eine Auswertung ausgewählt werden.

Nachfolgend soll die Erfindung beispielhaft näher erläutert werden.

Dabei zeigen:

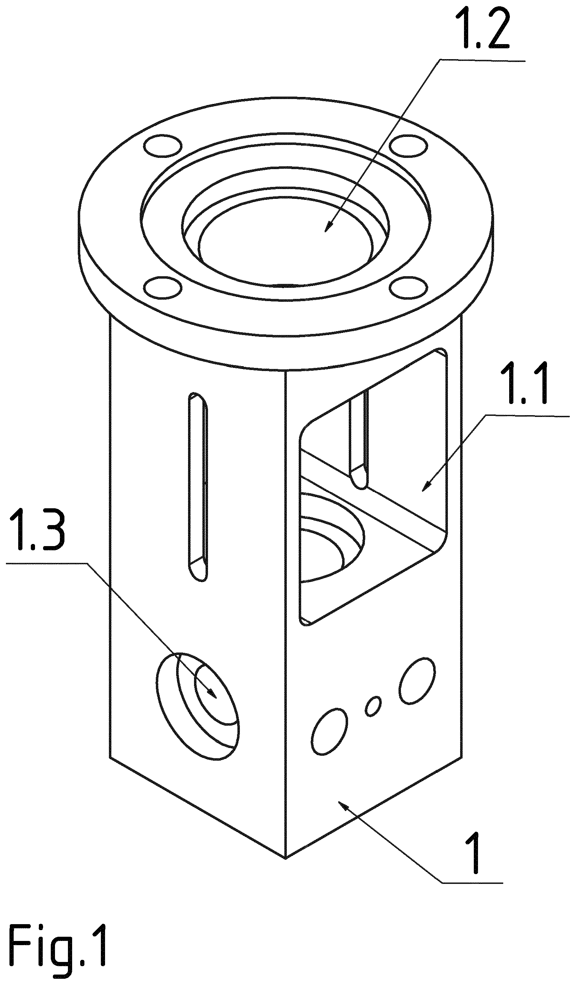

Figur 1 ein Beispiel eines Gehäuses zur Aufnahme und Befestigung der zwei Sensorsysteme an einem Messrohr als ein Beispiel eines Kanals;

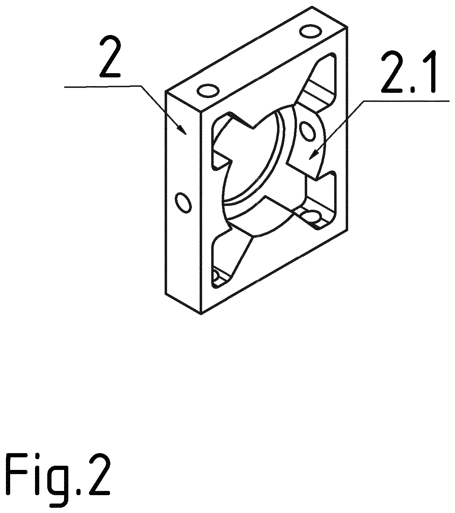

Figur 2 ein Beispiel eines Gehäuseteils zur Aufnahme eines Sensormoduls für ein Sensorsystem, das zur Wirbelstromdetektion ausgebildet ist und

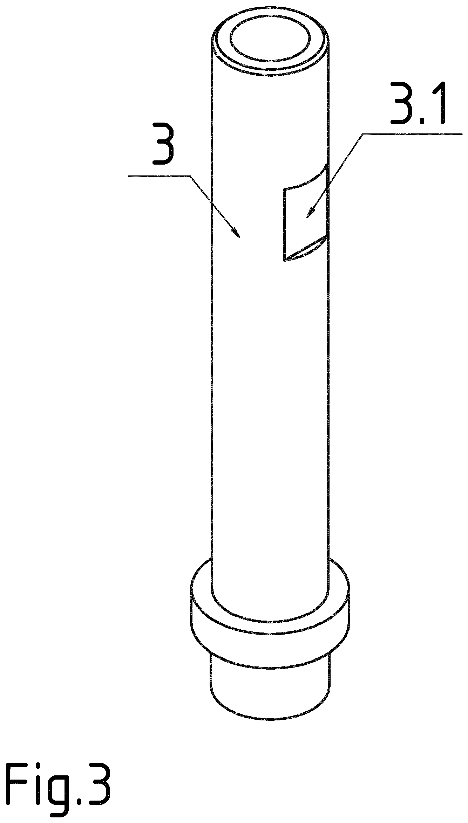

Figur 3 ein Messrohr.

Die Anordnung eines Messsystems erfolgt am Ausgang eines Extruders, mit dem eine Suspension, die für die Ausbildung von Elektroden eines Elektroenergiespeichers vorgesehen ist, durch ein Messrohr 3, als ein Beispiel eines Kanals, gefördert werden kann. Das Messsystem ist dabei an einem Kanal befestigbar, der zwischen Extruderausgang und dem Ausgang des Kanals, der in der Regel eine Austrittsdüse ist, angeordnet ist. In diesem Bereich soll das Material/Extrudat auf seine Homogenität geprüft werden. In Förderrichtung nach dem dort angeordneten Messsystem können alle Werkzeuge des Extruders angeschlossen werden. Im speziellen Fall der Herstellung von Batterieelektroden werden Elektrodenfolien mit einer Breitschlitzdüse ausgebildet.

Das verarbeitete Elektrodenmaterial besteht aus Aktivmaterial, Leitruß, Binder und Lösungsmittel. Daraus ergibt sich je nach Zusammensetzung ein Feststoffgehalt zwischen 80 Masse-% - 90 Masse-%. Unter Verwendung einer Breitschlitzdüse werden Elektroden in Form von Folien mit einer Dicke im Bereich 100 µm bis 600 µm im Grünzustand ausgebildet, die auf Trägerfolien aufgebracht werden.

Zur Realisierung der Materialcharakterisierung im Extrusionsprozess ist ein Messsystem mit kombinierten Ultraschall- und Wirbelstromsensorsystemen aufgebaut. Dies ermöglicht die Beobachtung eines breiten Spektrums der Charakteristiken des mittels des Extruders zur Austrittsdüse geförderten Elektrodenmaterials. Bei der Integration des Messsystems soll der Extrusionsprozess möglichst gering beeinflusst werden. Aus diesem Grund ist die Messstrecke kurz gestaltet.

Es erfolgte eine Anpassung des Strömungskanals an den Extruderausgang. Dafür ist ein austauschbares Messrohr 3 als ein Beispiel eines Kanals vorgesehen, das an die jeweils eingesetzten Sensorsysteme (Ultraschall und Wirbelstrom) angepasst werden kann. Durch die Austauschbarkeit kann das Material des Messrohrs 3 an die jeweilige Applikation angepasst werden, was die mechanischen, elektrischen, magnetischen und/oder akustischen Eigenschaften betreffen kann. Die Ultraschall- und Wirbelstromsensorsysteme wurden mit angepassten Geometrien gestaltet. Dieser Aufbau ist den folgenden Abschnitten zu entnehmen.

Das Sensorsystem, das zur Ultraschallmessung ausgebildet ist, nutzt bei diesem Beispiel zwei Ultraschallwandler, die diametral gegenüberliegend angeordnet sind. Das ermöglicht die Aufnahme von Reflexions- und Transmissionssignalen von Schallwellen. Als Koppelmedium wird zwischen Ultraschallwandlern und der Außenwand des Messrohrs 3 Öl eingesetzt. Dies erfordert eine mechanische Abtrennung des Messbereichs. Die Abdichtung kann mit Wellendichtringen realisiert werden. Am Messrohr 3 sind im Ultraschallmessbereich planare Flächen 3.1 ausgebildet worden, um im Kopplungsbereich der Ultraschallwandler parallele Flächen zwischen Ultraschallwandler und Messrohroberfläche zu erhalten. Dies zielt auf eine verringerte Veränderung der Wellenausbreitungsrichtung im Medium ab. Es können Ultraschallwandler der Kontakt- und Tauchtechnik für dieses Sensorsystem zum Einsatz kommen. Je nach Anwendungsbereich können geeignete Frequenzen der Ultraschallwandler ausgewählt werden. Bei der Applikation im Bereich der Batterieelektrodenherstellung eigenen sich Ultraschallprüfköpfe mit Resonanzfrequenzen im Bereich von 1 MHz bis 4 MHz für eine Überwachung der Homogenität des extrudierten Elektrodenmaterials. Die Ultraschallwandler stehen während der Messungen in Kontakt mit der äußeren Oberfläche des Messrohrs 3 an den planaren Flächen 3.1. Zwischen den Oberflächen des Messrohrs 3 und der sensitiven Oberflächen der Ultraschallwandler ist lediglich das Koppelmedium vorhanden. Vor jeder Anwendung muss diese Position geprüft werden, um Energieverluste der emittierten und detektierten Schallwellen in einem zu großen Spalt zwischen Ultraschallwandler und planarer Fläche 3.1 des Messrohrs 3 zu vermeiden. Zur Auswertung werden die Reflexions- und Transmissionssignale genutzt. Die Aufnahme der Signale sollte annähernd zeitgleich durch einen gepulsten Betrieb bei der Emission von Schallwellen erfolgen. An einem Ultraschallwandler erfolgt durch den piezoelektrischen Effekt eine Schwingungsbewegung mit mechanischen Wellen, die als Schallwellen durch die Wandung des Messrohrs 3 und das Extrudat, das durch das Messrohr 3 gefördert wird, emittiert werden. Mit einem Ultraschallwandler, der dem emittierenden Ultraschallwandler diametral gegenüberliegend angeordnet ist, können durch die Messrohrwand und das Extrudat emittierte Schallwellen in Transmission detektiert werden. Mit dem emittierenden Ultraschallwandler können in Pausen, in denen von ihm keine Schallwellenemission erfolgt an der Messrohrwand reflektierte Schallwellen detektiert werden. In diesem Empfangsmodus können Rückstreuinformationen detektiert werden.

Zur Realisierung eines Wirbelstromsensorsystems ist im Gehäuse 1, das zur Aufnahme eines erfindungsgemäßen Messsystems am Messrohr 3 befestigt werden kann, ein ausreichender mechanischer Freiraum vorgesehen. Dieser ermöglicht die Integration verschiedener elektrischer Spulensysteme als Sensormodule, die zur Wirbelstromdetektion ausgebildet sind. Es werden in diesem Sensorsystem Durchlaufspulen eingesetzt. Das heißt, die dabei eingesetzten elektrischen Sende- und Empfängerspulen umschließen das Messrohr 3. Sie haben einen Innendurchmesser von ca. 28,1 mm und je nach Wicklungszahl einen Außendurchmesser von 29,5 mm bis 33,5 mm. Als Spulendraht wird in diesem speziellen Anwendungsfall der Batterieelektrodenherstellung Kupferdraht mit einem Durchmesser von 250 µm verwendet. Die Wicklungszahl der einzelnen Spulen variiert dabei von 25 n bis 200 n. Es werden derzeit Induktivitäten im Bereich von 25 µH bis 200 µH erreicht. Der Füllgrad der elektrischen Spulen spielt in der Wirbelstromtechnik eine wichtige Rolle, deshalb sollte der Abstand zwischen Innendurchmesser der elektrischen Empfängerspule und Außendurchmesser des Messrohrs 3 möglichst gering sein. Zur Instrumentierung und Schutz der elektrischen Spulen werden diese in Form speziell angefertigter Sensormodule eingesetzt. Eine Sende- und eine Empfängerspule können dabei in einem Gehäuseteil 2 aufgenommen werden. Dazu ist an einer Seite des Gehäuseteils 2 eine Öffnung in Form einer Aussparung 2.1 ausgebildet, in die eine Sende- und eine Empfängerspule möglichst passgenau eingesetzt werden können. Für die elektrische Kontaktierung der beiden elektrischen Spulen sind entsprechende Freiräume im Bereich der Aussparung 2.1 sowie Bohrungen ausgebildet, durch die elektrische Leitungen zu den beiden elektrischen Spulen geführt sind. Die jeweilige Sendespule ist dabei mit einem Frequenzgenerator und die Empfängerspule mit einer Messeinrichtung zur Bestimmung der komplexen Empfängerspulenimpedanz (Wirbelstrommessgerät) verbunden, die Bestandteile einer elektronischen Auswerteeinheit sein kann (beides nicht gezeigt).

Ein oder mehrere Sensormodul(e) kann/können dann in einen entsprechend dimensionierten Freiraum 1.1 des Gehäuses 1 eingesetzt und darin fixiert werden. Mehrere Sensormodule können dabei in Förderrichtung des Elektrodenmaterials nacheinander in jeweils paralleler Ausrichtung zueinander angeordnet sein. So kann man jeweils gleiche Sensormodule so anordnen. Man kann aber auch unterschiedlich konfigurierte Sensormodule so anordnen.

Durch Bohrungen 1.2 im Gehäuse 1 kann man das Messrohr 3 einführen. Die Sensormodule sind so dimensioniert, dass das Messrohr 3 ebenfalls durch das/die Sensormodul(e) geführt werden kann.

In nicht dargestellter Form kann mindestens eine Empfängerspule auch in die Messrohrwand eingebettet oder in Nuten, die in der Außenwand des Messrohrs 3 ausgebildet sind, eingesetzt sein. Eine Empfängerspule kann dann bei einem Sensormodul in ein Gehäuseteil 2 eingesetzt sein.

Die Wirbelstromtechnik nutzt zur Untersuchung von Materialien eine Sendespule und eine Empfängerspule. Die Positionierung dieser zwei Spulen zueinander ist prinzipiell frei wählbar und ermöglicht dadurch eine hohe Flexibilität bei der Entwicklung eines Wirbelstromsensorsystems. Dabei kann eine Unterscheidung in ein Absolutsystem und ein Differenzsystem getroffen werden. Bei dem Absolutsystem können sich Sende- und Empfängerspule in einem Sensormodul befinden. Die Sendespule ist die außen und die Empfängerspule die innen angeordnete elektrische Spule. Bei einem Absolutsystem wirkt sich eine Materialveränderung des Extrudats absolut verstärkend oder abschwächend aus. Die aufgenommene elektrische Spannung an der Empfängerspule enthält neben der interessanten Fehlersignalspannung (Informationen über Materialveränderungen, Risse, Hohlräume, Materialfehler) auch die induzierte elektrische Spulenspannung sowie Störsignale etc. Diese Eigenschaft kann dazu führen, dass kleine Materialschwankungen nicht erkennbar sind. Das Differenzsystem nutzt zwei identische elektrische Absolutspulen, die gegenläufig elektrisch verschaltet sind. Dies führt zur Kompensation der elektromagnetischen Felder. Somit ist zu Beginn der Messung oder bei homogenem Extrudatmaterial die elektrische Empfängerspulenspannung gleich null. Dadurch ist es möglich, geringe Materialschwankungen und somit kleine Amplitudenauslenkungen erfassbar zu machen, da hier nur die elektrische Fehlersignalspannung gemessen wird. Beide Systeme können in einem mechanischen Freiraum als Aussparung 2.1 in einem Gehäuseteil 2 realisiert werden. Zur Auswertung der Signale wird ein Frequenzsweep genutzt, der den Bereich von 10 kHz bis 100 MHz abdeckt. Dabei werden Realteil, Imaginärteil und Betrag der Impedanz über die Zeit erfasst. Zur Analyse werden die Signale im Bereich von signifikanten Peaks (Amplitudenwerten) oder beim Überschreiten einer Toleranzgrenze näher betrachtet. Diese Bereiche deuten auf Veränderungen, wie z.B. Inhomogenitäten, Partikelform-/größenänderung, Druckänderungen oder äußere Störeinflüsse hin.

Am Gehäuse 1 sind zwei diametral gegenüberliegend angeordnete Bohrungen 1.3 vorhanden in die passgenau jeweils ein nicht dargestellter Ultraschallwandler eingeführt und so fixiert werden, dass die jeweilige aktive und sensitive Oberfläche in berührenden Kontakt mit einer der planaren Flächen 3.1, die am Messrohr 3 vorhanden sind, kommt und lediglich ein Koppelmedium zwischen diesen Oberflächen und der jeweiligen planaren Fläche 3.1 vorhanden ist.

## Patentansprüche

1. System umfassend ein Messsystem zur Überwachung der Materialparameter und/oder Homogenität einer durch einen Kanal geförderten Suspension, die elektrisch leitend ist oder elektrisch leitende Komponenten enthält, und mit der eine Elektrode eines elektrischen Akkumulators oder Elektroenergiespeichers ausgebildet wird, eine elektronische Auswerteeinheit, einen Kanal, einen Extruder und eine Austrittsdüse, bei dem
ein zur Ultraschallprüfung ausgebildetes Sensorsystem mindestens einen Ultraschallwandler aufweist, der zur Emission von Schallwellen an der Außenwand des Kanals angeordnet ist, und
ein zur Wirbelstromdetektion ausgebildetes Sensorsystem, das mit mindestens einer elektrischen Sendespule und mindestens einer elektrischen Empfängerspule oder einem Riesen-magnetorisistiven Sensor (GMR), anisotropen magnetoresistiven Sensor (AMR), supraleitenden Quanteninterferenz-Sensor (SQUID) oder einem Hall-Sensor gebildet ist, in Bewegungsrichtung der Suspension vor oder hinter dem zur Ultraschallprüfung ausgebildeten Sensorsystem angeordnet ist und beide Sensorsysteme zwischen dem Extruder und angeschlossener Austrittsdüse am Kanal, durch den die Suspension als Extrudat gefördert wird, angeordnet sind und
das zur Ultraschallprüfung ausgebildete Sensorsystem und das zur Wirbelstromdetektion ausgebildete Sensorsystem an die elektronische Auswerteeinheit angeschlossen sind und die elektronische Auswerteeinheit ausgebildet ist, mittels der von beiden Sensorsystemen erfassten Messsignale Fehler der Materialparameter und Homogenität der geförderten Suspension zu erkennen.

2. System nach Anspruch 1, **dadurch gekennzeichnet, dass** ein zweiter Ultraschallwandler des zur Ultraschallprüfung ausgebildeten Sensorsystems diametral dem anderen Ultraschallwandler gegenüberliegend an der Kanalaußenwand angeordnet ist.

3. System nach einem der vorhergehenden Ansprüche, **dadurch gekennzeichnet, dass** der/die Ultraschallwandler eine konkav gewölbte Oberfläche aufweisen, die an einer entsprechend konvex gewölbten Oberfläche des Kanals anliegend oder an einer planaren Fläche (3.1) an der Außenwand des Kanals eine planare Oberfläche des/der Ultraschallwandler(s) angeordnet ist/sind.

4. System nach einem der vorhergehenden Ansprüche, **dadurch gekennzeichnet, dass** mindestens ein Sende- und Empfängerspulenpaar ein Sensormodul, das zur Wirbelstromdetektion ausgebildet ist, bilden.

5. System nach einem der vorhergehenden Ansprüche, **dadurch gekennzeichnet, dass** mehrere Sende- und Empfängerspulenpaare ein Sensormodul, das zur Wirbelstromdetektion ausgebildet ist, bilden, wobei die Sensormodule austauschbar in einem Gehäuse (1) angeordnet und/oder alternierend betreibbar sind.

6. System nach einem der vorhergehenden Ansprüche, **dadurch gekennzeichnet, dass** mindestens eine Sendespule um den Kanalumfang ausgebildet oder angeordnet ist und eine Empfängerspule im Inneren der Sendespule, in die Kanalwandung integriert, in Nuten an der Außenwand des Kanals aufgenommen oder im Inneren des Kanals angeordnet ist.

7. System nach einem der vorhergehenden Ansprüche, **dadurch gekennzeichnet, dass** das/die Sensorsystem(e), das/die zur Wirbelstromdetektion ausgebildet ist/sind, zur Durchführung einer Absolut- und/oder Differenzmessung ausgebildet ist.

## Claims

1. A system comprising a measuring system for monitoring the material parameters and/or homogeneity of a suspension that is conveyed through a channel, that is electrically conductive or comprises electrically conductive components, and by which an electrode of an electrical storage battery or electrical energy store is configured, an electronic evaluation unit, a channel, an extruder and an outlet nozzle,
in which
a sensor system configured for an ultrasound inspection has at least one ultrasonic transducer that is arranged at the outer wall of the channel for the emission of sound waves; and
a sensor system that is configured for eddy current detection and that is formed with at least one electrical transmission coil and at least one electrical receiver coil or with a giant magnetoresistive sensor (GMR), an anisotropic magnetoresistive sensor (AMR), a superconducting quantum interference sensor (SQUID), or a Hall sensor is arranged upstream or downstream of the sensor system configured for the ultrasound inspection in the direction of movement of the suspension, and both sensor systems are arranged between the extruder and the connected outlet nozzle on the channel through which the suspension is conveyed as extrudate; and
the sensor system configured for the ultrasound inspection and the sensor system configured for the eddy current detection are connected to the electronic evaluation unit and the electronic evaluation unit is configured to recognize flaws in the material parameters and homogeneity of the conveyed suspension by means of the measurement signals detected by both sensor systems.

2. The system in accordance with claim 1, **characterized in that** a second ultrasonic transducer of the sensor system configured for the ultrasound inspection is arranged at the outer channel wall diametrically opposite the other ultrasonic transducer.

3. The system in accordance with one of the preceding claims, **characterized in that** the ultrasonic transducer or transducers has/have a concavely arched surface that is/are arranged contacting a correspondingly convexly arched surface of the channel; or
a planar surface of the ultrasonic transducer or transducers is/are arranged at a planar surface (3.1) at the outer wall of the channel.

4. The system in accordance with one of the preceding claims, **characterized in that** at least one transmission and receiver coil pair forms a sensor module that is configured for eddy current detection.

5. The system in accordance with one of the preceding claims, **characterized in that** a plurality of transmission and receiver coil pairs form a sensor module that is configured for eddy current detection, with the sensor modules being replaceably arranged in a housing (1) and/or being alternatingly operable.

6. The system in accordance with one of the preceding claims, **characterized in that** at least one transmission coil is formed or arranged around the channel periphery; and
a receiver coil in the interior of the transmission coil is integrated in the channel wall, is received in grooves at the outer wall of the channel, or is arranged in the interior of the channel.

7. The system in accordance with one of the preceding claims, **characterized in that** the sensor system or systems that is/are configured for eddy current detection is/are configured for carrying out an absolute measurement and/or a difference measurement.

## Revendications

1. Système comprenant un système de mesure pour surveiller les paramètres matériels et/ou l'homogénéité d'une suspension transportée par un canal, qui est électriquement conductrice ou contient des composants électriquement conducteurs, et avec laquelle une électrode d'un accumulateur électrique ou accumulateur d'énergie électrique est réalisée, une unité d'évaluation électronique, un canal, une extrudeuse et une buse de sortie,
pour lequel
un système de capteur réalisé pour le contrôle par ultrasons présente au moins un transducteur ultrasonore, qui est disposé sur la paroi extérieure du canal pour l'émission d'ondes sonores, et
un système de capteur réalisé pour la détection par courants de Foucault, qui est formé avec au moins une bobine d'émission électrique et au moins une bobine de réception électrique ou un capteur magnétorésistif géant (GMR), capteur magnétorésistif anisotrope (AMR), capteur supraconducteur à interférence quantique (SQUID) ou un capteur à effet Hall, est disposé dans le sens de mouvement de la suspension devant ou derrière le système de capteur réalisé pour le contrôle par ultrasons, et les deux systèmes de capteur sont disposés entre l'extrudeuse et la buse de sortie raccordée au canal à travers lequel la suspension est transportée sous forme d'extrudat, et
le système de capteur réalisé pour le contrôle par ultrasons et le système de capteur réalisé pour la détection par courants de Foucault sont raccordés à l'unité d'évaluation électronique, et l'unité d'évaluation électronique est réalisée pour détecter, au moyen des signaux de mesure acquis par les deux systèmes de capteur, des erreurs des paramètres matériels et de l'homogénéité de la suspension transportée.

2. Système selon la revendication 1, **caractérisé en ce qu'**un deuxième transducteur ultrasonore du système de capteur réalisé pour le contrôle par ultrasons est disposé sur la paroi extérieure du canal de manière diamétralement opposée à l'autre transducteur ultrasonore.

3. Système selon l'une quelconque des revendications précédentes, **caractérisé en ce que** le/les transducteurs ultrasonores présentent une surface bombée de manière concave, qui est en contact avec une surface bombée de manière convexe correspondante du canal ou
une surface plane du/des transducteur(s) ultrasonore(s) est/sont disposée(s) sur une face plane (3.1) sur la paroi extérieure du canal.

4. Système selon l'une quelconque des revendications précédentes, **caractérisée en ce qu'**au moins une paire de bobines d'émission et de réception forme un module capteur qui est réalisé pour la détection par courants de Foucault.

5. Système selon l'une quelconque des revendications précédentes, **caractérisé en ce que** plusieurs paires de bobines d'émission et de réception forment un module capteur qui est réalisé pour la détection par courants de Foucault, dans lequel les modules capteurs sont disposés de manière interchangeable dans un boîtier (1) et/ou peuvent fonctionner en alternance.

6. Système selon l'une quelconque des revendications précédentes, **caractérisé en ce qu'**au moins une bobine d'émission est réalisée ou disposée autour de la périphérie du canal et une bobine de réception est
intégrée à l'intérieur de la bobine d'émission, dans la paroi du canal, logée dans des rainures sur la paroi extérieure du canal ou disposée à l'intérieur du canal.

7. Système selon l'une quelconque des revendications précédentes, **caractérisé en ce que** le(s) système(s) de capteur, qui est/sont réalisé(s) pour la détection par courants de Foucault, est réalisé pour effectuer une mesure absolue et/ou différentielle.
